# EUROPÄISCHE PATENTANMELDUNG

(11) **EP 1 106 885 A2**
(43) Veröffentlichungstag der Anmeldung: **13.06.2001**
(21) Anmeldenummer: 00890361.9
(22) Anmeldetag: 30.11.2000
(51) Int. Cl.: F16L 1/06, F16L 55/162

(54) **Verfahren und Vorrichtungen zum Einbau eines Inliners in Erdbauwerke**

(30) Priorität: 09.12.1999 AT 206899
(71) Anmelder: Angerlehner Hoch- und Tiefbau GmbH, 4053 Pucking (AT)
(72) Erfinder: Angerlehner, Alfred, 4614 Marchtrenk (AT)
(74) Vertreter: Babeluk, Michael, Dipl.-Ing. Mag.

(57) **Zusammenfassung**

Die Erfindung betrifft ein Verfahren zum Anbau eines Inliners (26) an einen bereits eingebauten Inliner (26a) in einem Erdbauwerk, wobei der Inliner (26) auf einer auf Rollen (4, 5, 6, 7, 8, 9) gelagerten Transporteinrichtung zu dem bereits eingebauten Inliner (26a) verfahren wird und an diesen angedrückt wird. Um ein einfaches und sicheres Verlegen zu gewährleisten ist vorgesehen, dass zunächst die Zentriereinrichtung durch Spanneinrichtungen (27) fest mit einem Inliner (26a) verbunden wird, danach der Abstand des anzubauenden Inliners (26) vom bereits eingebauten Inliner verringert wird, wonach weitere Spanneinrichtungen (28) der Zentriereinrichtung fest mit dem anderen Inliner (26) verbunden werden, und dass danach der Abstand zwischen den Spanneinrichtungen (27, 28) verringert wird, bis der anzubauende Inliner (26) fest an dem bereits eingebauten Inliner (26a) anliegt.

## Beschreibung

Die vorliegende Erfindung betrifft ein Verfahren zum Anbau eines Inliners an einen bereits eingebauten Inliner in einem Erdbauwerk, wobei der Inliner auf einer auf Rollen gelagerten Transporteinrichtung zu dem bereits eingebauten Inliner verfahren wird und an diesen angedrückt wird.

Der Einbau von Inlinern hat sich seit einigen Jahren als sinnvolle und kostengünstige Alternative zur Sanierung von baufälligen Erdbauwerken, wie etwa Kanalsträngen, bewährt. Dabei werden in den undichten Kanalstrang formstabilisierend verstärkte GFK-Rohre, deren Profil annähernd dem zu reparierenden Kanalstrang entspricht, in dieses Erdbauwerk eingebracht und dichtend miteinander verbunden.

Diese Maßnahmen wurden bisher unter hohem manuellem Aufwand durchgeführt und sind auf entsprechend leichte Bauteile beschränkt. Größer dimensionierte Inliner bereiten beim rein manuellen Einbau aufgrund ihres Gewichtes erhebliche Schwierigkeiten, da in den betroffenen Erdbauwerken aufgrund des geringen Raumangebotes keine üblichen Hilfseinrichtungen, wie z.B. Hebevorrichtungen eingesetzt werden können, welche eine leichtere Handhabung ermöglichen würden.

Aus der DE 42 06 623 A1 ist in diesem Zusammenhang ein Rohrfahrzeug für die Innenbearbeitung von verlegten Rohrsträngen bekannt, welches zumindest ein Fahrgestell mit mehreren angetriebenen Rädern sowie eine darauf angeordnete Werkzeughalteeinrichtung aufweist. Die Lagerkörper der Antriebsräder sind radial verstellbar, um das Fahrzeug an verschiedene Innendurchmesser anpassen zu können. Die Werkzeughalteeinrichtung ist um eine in Fahrtrichtung verlaufende Achse schwenkbar und in Richtung auf die Wandung der Rohrleitung verstellbar. Das Rohrfahrzeug dient zur Vorbereitung unterirdisch verlegter Rohrleitungen für eine nachfolgend durchzuführende Rohrsanierung. Zur Vorbereitung gehören eine visuelle Überprüfung des Zustandes mittels einer Fernsehkamera, Bohr-, Fräs-, Schleif- und Schweißvorgänge sowie auch die Injektion von aushärtbaren Harzen in Fehlerstellen. Die nachfolgende Rohrsanierung geschieht durch Auskleiden mit einem schlauchartigen Gebilde, wobei der Schlauch nach dem Einziehen in die Rohrleitung durch Druckluft aufgeblasen und mittels einer Strahlungsquelle ausgehärtet wird. Derartige Fahrzeuge sind allerdings für den Einbau von formstabilen Inlinern nicht geeignet.

Aus der DE 36 10 836 A1 ist eine Vorrichtung zum Aneinanderfügen von Rohren bekannt. Die Vorrichtung besteht aus zwei durch hydraulische Spannzylinder betätigbare Rohrgreifzangen, welche mit auf der Rohroberfläche aufsitzenden Stützrädern versehen sind. Die Rohrgreifzangen sind durch eine teleskopische Führungstraverse miteinander verbunden und können durch hydraulisch betätigbare Zugzylinder zusammengezogen werden. Das Gerät ist allerdings nur für Rohre kleinerer Durchmesser geeignet, in deren Innerem nicht gearbeitet werden kann.

Aus der US 5,129,761 A ist ein Verfahren und eine Vorrichtung zum Einbau von Rohrabschnitten in ein Erdbauwerk bekannt, bei der die einzelnen Rohrabschnitte auf Schienen zu der Verlegestelle transportiert werden. Die eigentlichen Verlegemaschine ist im Inneren der Rohre angeordnet und dazu vorgesehen, das anzubauende Rohr an das letzte bereits eingebaute Rohr heranzuführen. Dabei stützt sich die Verlegemaschine einerseits in dem bereits verlegten Rohr und andererseits am Boden des Erdbauwerks, in dem die Rohre zu verlegen sind, ab. Es hat sich herausgestellt, dass es auf diese Weise schwierig ist, einerseits die erforderlichen hohen Anpressdrücke zur Herstellung einer dichten Verbindung bereitzustellen und andererseits eine genaue winkelmäßige Ausrichtung der Rohre zu gewährleisten. Diese Ausrichtung wird umso schwieriger, je ungleichmäßiger die Innenfläche des Erdbauwerks ist, in dem die Rohre zu verlegen sind.

Die DE 22 00 296 A zeigt ein Verfahren und eine Vorrichtung zum Verlegen von Rohren, wobei die erforderliche Anpresskraft dadurch gegeben ist, dass sich teleskopische Beine am Erdbauwerk abstützen, in dem die Rohre verlegt werden. Eine solche Abstützung ist jedoch nicht immer möglich und bringt überdies die oben bereits beschriebenen Probleme.

Weiters ist aus der DE 35 31 648 A ein Verfahren zum Einschieben eines Rohres in das mufferförmige Ende eines anderen Rohres bekannt, bei dem ein im Wesentlichen zylinderförmiger Führungskörper in ein Rohr eingesetzt wird, um das Aufschieben des anderen Rohres zu erleichtern. Die erforderliche Anpresskraft muss bei diesem Verfahren jedoch jedenfalls von außen aufgebracht werden.

Aufgabe der vorliegenden Erfindung ist es, ein Verfahren anzugeben, das die obigen Nachteile vermeidet und bei dem es insbesondere möglich ist, auch groß dimensionierte und daher schwere Inliner sicher zu versetzen, wobei der manuelle Arbeitsaufwand geringer sein soll, als bei herkömmlichen Verfahren.

Erfindungsgemäß wird diese Aufgabe dadurch gelöst, dass zunächst die Zentriereinrichtung durch Spanneinrichtungen fest mit einem Inliner verbunden wird, danach der Abstand des anzubauenden Inliners vom bereits eingebauten Inliner verringert wird, wonach weitere Spanneinrichtungen der Zentriereinrichtung fest mit dem anderen Inliner verbunden werden, und dass danach der Abstand zwischen den Spanneinrichtungen verringert wird, bis der anzubauende Inliner fest an dem bereits eingebauten Inliner anliegt.

Wesentlich an der vorliegenden Erfindung ist, dass das Zentrieren und das Anpressen des zu verlegenden Inliners an den bereits verlegten Inliner durch eine Zentriereinrichtung durchgeführt wird, die sich über Spanneinrichtungen nur an den beiden zu verbindenden Inlinern abstützt. Auf diese Weise ist das Verlegen der Inliner unabhängig von der Qualität und der Geometrie der Oberfläche des Erdbauwerks, in dem die Inliner verlegt werden. Gleichzeitig kann auf diese Weise ohne zusätzliche Mess- und Regelvorgänge eine exakte axiale Ausrichtung der Inliner erwirkt werden.

Grundsätzlich ist es möglich, die Zentriereinrichtung zunächst auf dem zu verlegenden Inliner zu befestigen und während des Verlegevorgangs in den bereits verlegten Inliner einzuschieben. Eine wesentliche Vereinfachung der Konstruktion der Transporteinrichtung und der Zentriereinrichtung kann jedoch dadurch erreicht werden, dass vor dem Anbau des Inliners eine Spanneinrichtung fest mit dem bereits eingebauten Inliner verbunden wird.

In einer besonders bevorzugten Variante des erfindungsgemäßen Verfahrens werden folgende Schritte hintereinander ausgeführt:
- Verfahren eines zu verlegenden Inliners, der auf eine Transporteinrichtung aufgespannt ist, zu einem bereits eingebauten Inliner, auf dem eine Zentriereinrichtung über eine Spanneinrichtung befestigt ist;
- Aufschieben des zu verlegenden Inliners auf eine weitere Spanneinrichtung der Zentriereinrichtung;
- Spannen der weiteren Spanneinrichtung, um den zu verlegenden Inliner fest mit der Zentriereinrichtung zu verbinden;
- Einziehen der Rollen zwischen dem bereits eingebauten Inliner und dem zu verlegenden Inliner;
- Verringern des Abstands zwischen den Spanneinrichtungen der Zentriereinrichtung, bis der anzubauende Inliner dichtend an dem bereits angebauten Inliner anliegt;
- Befestigen des anzubauenden Inliners im Erdbauwerk;
- Zurückziehen der Transporteinrichtung;
- Lösen der Spanneinrichtungen der Zentriereinrichtung und Versetzen der Zentriereinrichtung an das Ende des neu angebauten Inliners;

Im Sinne der Erfindung ist es jedoch auch möglich, dass die Befestigung des neu angebauten Inliners im Erdbauwerk erst nach dem Entfernen der Transporteinrichtung durchgeführt wird.

Die Transporteinrichtung kann selbstfahrend ausgeführt sein oder auch durch Seilzüge bewegt werden, was eine bevorzugte Variante des erfindungsgemäßen Verfahrens darstellt.

Weiters betrifft die Erfindung eine Vorrichtung zum Anbau eines Inliners an einen bereits eingebauten Inliner gemäß Patentanspruch 6.

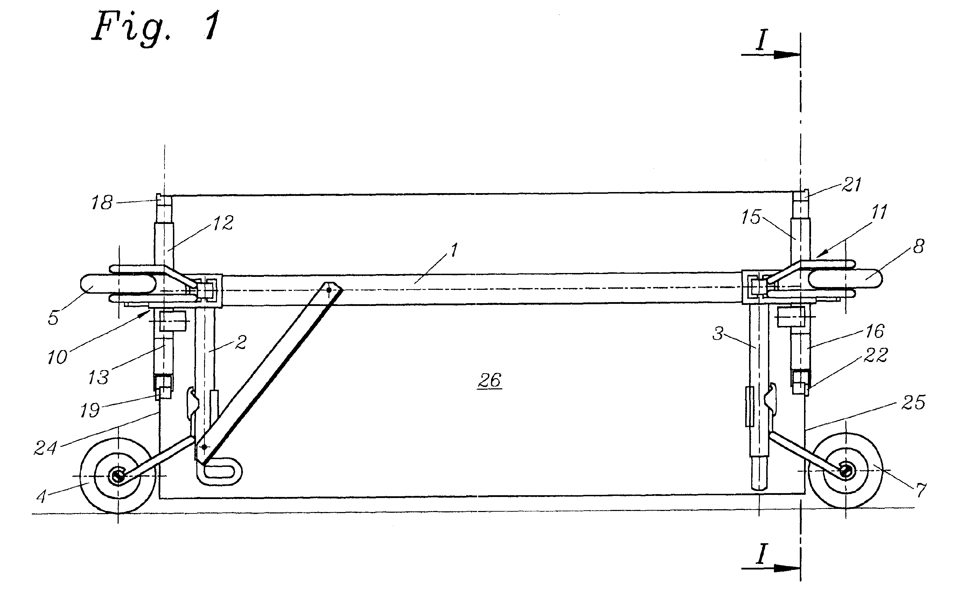

In der Folge wird die Erfindung anhand der in den Figuren dargestellten Ausführungsbeispiele näher erläutert. Es zeigen die
- Fig. 1: eine Transporteinrichtung mit aufgesetztem Inliner in einer Seitenansicht,

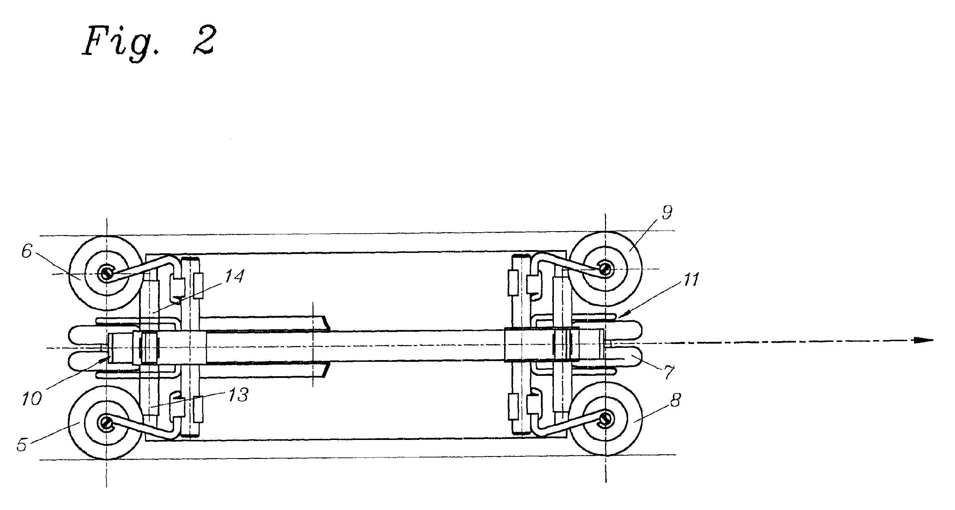

- Fig. 2: eine Transporteinrichtung nach Fig. 1 in einer Draufsicht,

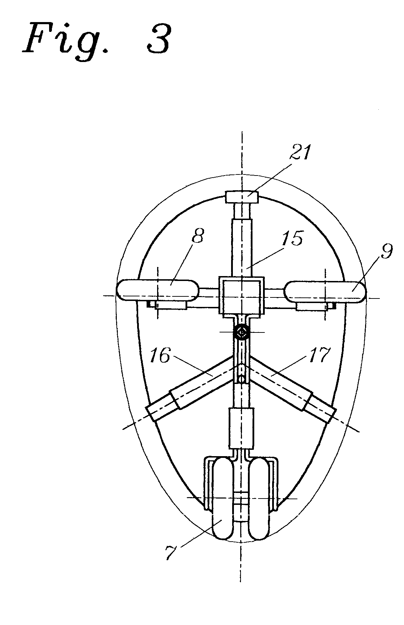

- Fig. 3: einen Schnitt nach Linie III - III in Fig. 1,
- Fig. 4: eine Seitenansicht einer Zentriereinrichtung,

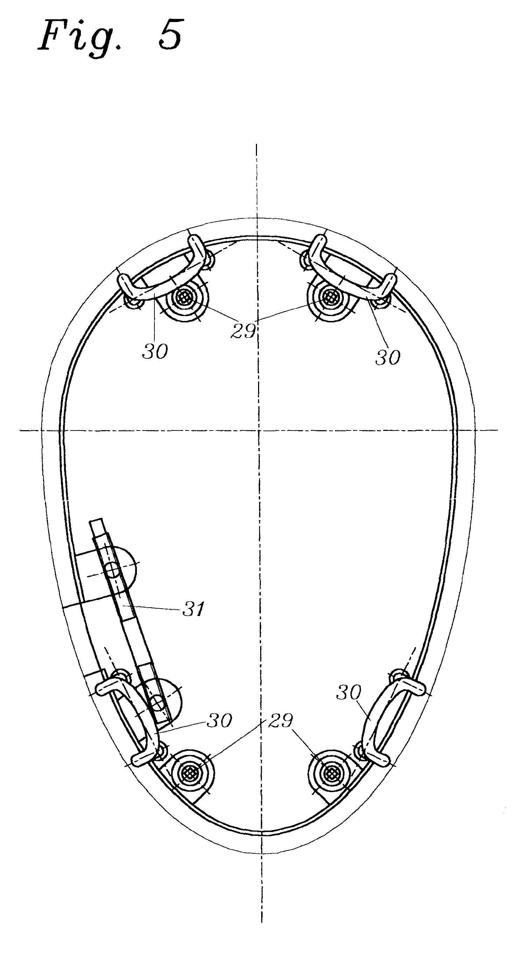

- Fig. 5: eine Vorderansicht der Zentriereinrichtung, und die
- Fig. 6 bis 9: zeigen die einzelnen Schritte des Anbaus eines Inliners.

Die erfindungsgemäße Transporteinrichtung besteht aus einem Längsträger 1, der in unmittelbarer Nähe zu seinen Stirnseiten 10, 11 je einen Sternträger 2, 3 aufweist, an denen jeweils mindestens drei höhenverstellbare Rollen 4, 5, 6, 7, 8, 9 befestigt sind. Direkt an den beiden Stirnseiten 10, 11 sind jeweils mindestens zwei, bevorzugt aber drei Stempel 12, 13, 14, 15, 16, 17, welche an ihren Stirnseiten jeweils eine Abstützplatte 18, 19, 20, 21, 22, 23 aufweisen, welche die Kanten 24, 25 des Inliners 26 teilweise umgreifen.

In einer nicht dargestellten Weise ist der Längsträger 1 so ausgestattet, dass seine Länge verändert und damit an die Länge des zu transportierenden Inliners angepasst werden kann. Ebenso können die Stempel 12 bis 17 durch Veränderung ihrer Länge an unterschiedliche Querschnittprofile des Inliners 26 angepasst werden.

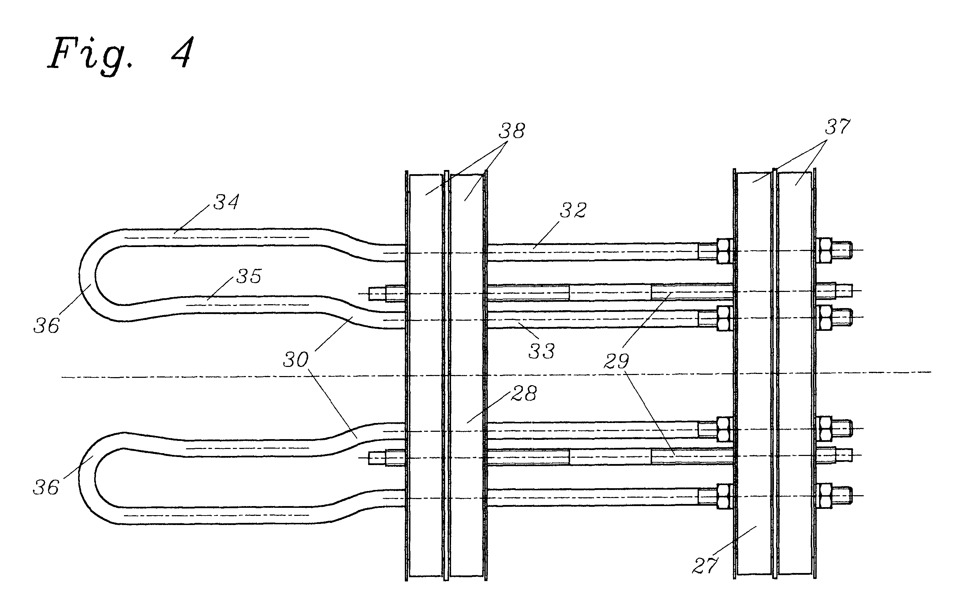

Die erfindungsgemäße Zentriervorrichtung besteht aus zwei Spanneinrichtungen in der Form von Spannrahmen 27, 28, welche, wie aus Fig. 4 hervorgeht, jeweils als Doppelrahmen ausgebildet sein können. Zwischen diesen Spannrahmen 27 und 28 befinden sich mehrere Zugeinrichtungen 29, welche zur Distanzverringerung zwischen den Spannrahmen 27 und 28 dienen. Am Spannrahmen 27 sind mehrere über den inneren Umfang des Spannrahmens 27 verteilte Zentrierbügel 30 fest montiert. Der Umfang der Spannrahmen 27 und 28 wird jeweils durch Einrichtungen 31 so verändert, dass die Spannrahmen im gespannten Zustand fest an die Innenseite des Inliners angepresst sind, oder im entspannten Zustand von der Innenseite des Inliners gelöst sind. Die Einrichtungen 31 sind ebenso wie die Zugeinrichtungen 29 in bevorzugten Ausführungsvarianten als Spindeln oder als elektrisch, hydraulisch bzw. pneumatisch betätigte Vorrichtungen ausgebildet.

Die U-förmigen Zentrierbügel 30 weisen auf ihren Schenkeln 32, 33 je einen Abschnitt 34, 35 auf, der zwischen der U-förmigen Krümmung 36 und dem Spannring 28 liegt und federnd nach Außen gebogen ist. Die Krümmung 36 ist etwa im selben Ausmaß wieder nach Innen gebogen. Diese Ausgestaltung gewährleistet eine selbstzentrierende Ausrichtung eines auf die Zentrierbügel 30 aufgeschobenen Inliners. Die nach Innen gebogenen Krümmungen 36 erleichtern dabei das Aufschieben.

Um den festen Sitz der Spannrahmen an der Innenseite der Inliner zu unterstützen hat es sich als vorteilhaft erwiesen, die Spannrahmen an ihrem äußeren Umfang mit rutschfesten Zusatzeinrichtungen 37, 38 auszustatten. Dieses Zusatzeinrichtungen 37 und 38 können z.B. Gummibänder sein.

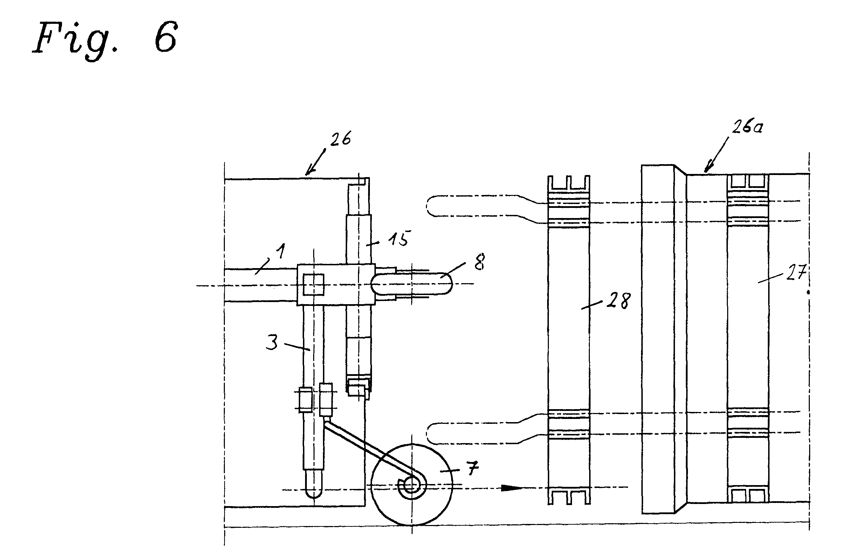

In den Fig. 6 bis 9 ist der Montageablauf erklärt. Die Fig. 6 zeigt den Transport eines Inliners 26 zu einem bereits versetzten Inliner 26a. In dem Inliner 26a ist eine nur angedeutete Zentriervorrichtung durch einen Spannring 27 gehalten.

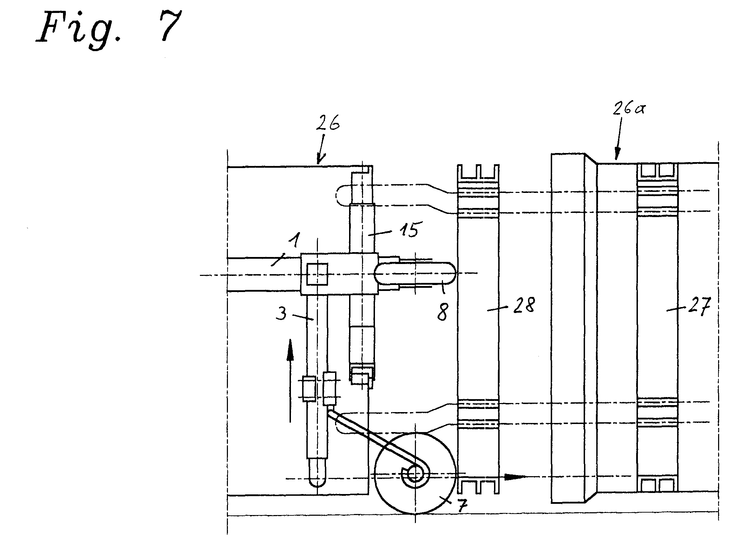

In der Fig. 7 ist die Aufnahme des Inliners 26 auf den Zentrier- und Tragbügeln gezeigt.

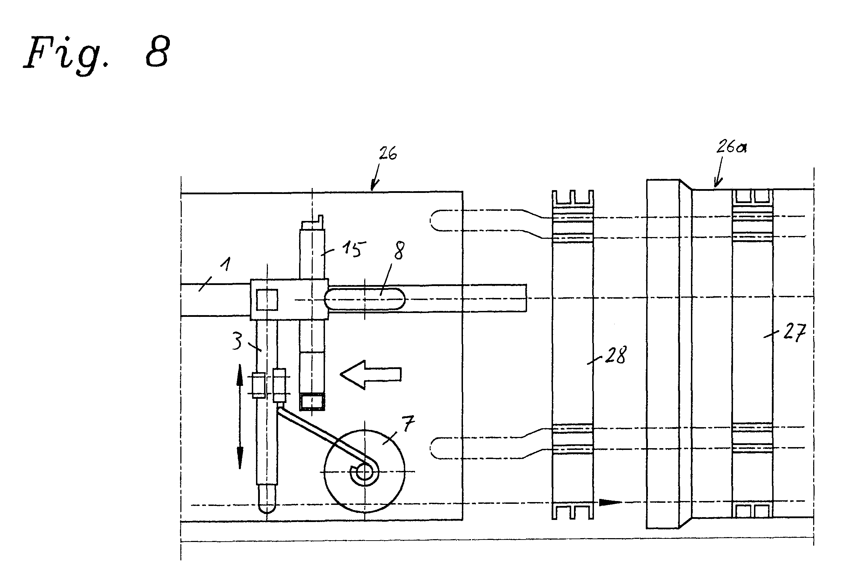

Die Fig. 8 zeigt eine Stellung nach dem Einziehen der Räder 7, 8 in den zu versetzenden Inliner 26, um ein weiteres Aufschieben auf den bereits versetzten Inliner 26a zu ermöglichen.

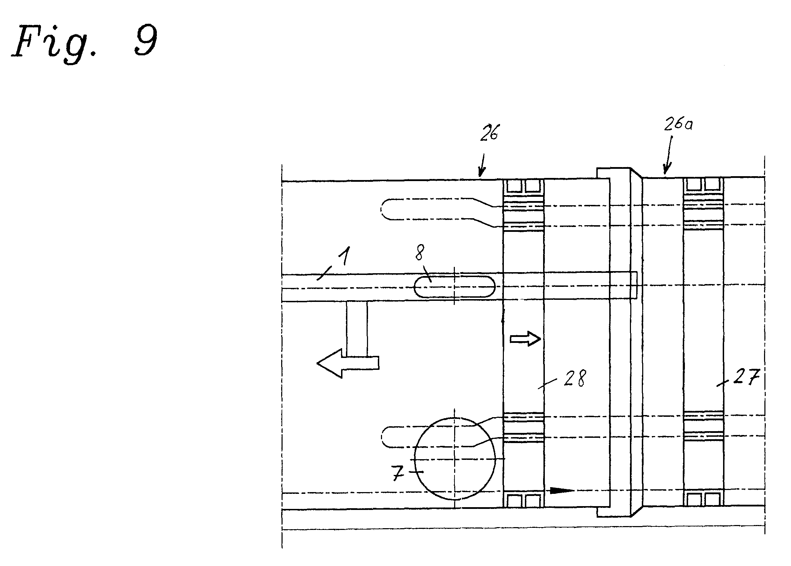

Die Fig. 9 zeigt letztlich den Inliner 26 im versetzten Zustand, der durch die Spannringe 27 und 28 in seine Position gebracht worden ist. Im Anschluss daran werden die beiden Spannringe 27 und 28 von den Innenwänden der Inliner 26 und 26a gelöst und gemeinsam mit der Transportvorrichtung herausgezogen, um die Montage des nächsten Inliners zu ermöglichen.

## Patentansprüche

1. Verfahren zum Anbau eines Inliners (26) an einen bereits eingebauten Inliner (26a) in einem Erdbauwerk, wobei der Inliner (26) auf einer auf Rollen (4, 5, 6, 7, 8, 9) gelagerten Transporteinrichtung zu dem bereits eingebauten Inliner (26a) verfahren wird und an diesen angedrückt wird, **dadurch gekennzeichnet**, dass zunächst die Zentriereinrichtung durch Spanneinrichtungen (27) fest mit einem Inliner (26a) verbunden wird, danach der Abstand des anzubauenden Inliners (26) vom bereits eingebauten Inliner (26a) verringert wird, wonach weitere Spanneinrichtungen (28) der Zentriereinrichtung fest mit dem anderen Inliner (26) verbunden werden, und dass danach der Abstand zwischen den Spanneinrichtungen (27, 28) verringert wird, bis der anzubauende Inliner (26) fest an dem bereits eingebauten Inliner (26a) anliegt.

2. Verfahren nach Anspruch 1, **dadurch gekennzeichnet**, dass vor dem Anbau des Inliners (26) eine Spanneinrichtung (27) fest mit dem bereits eingebauten Inliner (26a) verbunden wird.

3. Verfahren nach einem der Ansprüche 1 oder 2, **dadurch gekennzeichnet**, dass folgende Schritte durchgeführt werden:
- Verfahren eines zu verlegenden Inliners (26), der auf eine Transporteinrichtung aufgespannt ist zu einem bereits eingebauten Inliner (26a), auf dem eine Zentriereinrichtung über eine Spanneinrichtung (27) befestigt ist.
- Aufschieben des zu verlegenden Inliners (26a) auf eine weitere Spanneinrichtung (28) der Zentriereinrichtung.
- Spannen der weiteren Spanneinrichtung (28), um den zu verlegenden Inliner (26a) fest mit der Zentriereinrichtung zu verbinden.
- Einziehen der Rollen (4, 5, 6) zwischen dem bereits eingebauten Inliner (26a) und dem zu verlegenden Inliner (26).
- Verringern des Abstands zwischen den Spanneinrichtungen (27, 28) der Zentriereinrichtung, bis der anzubauende Inliner (26) dichtend an dem bereits angebauten Inliner (26a) anliegt.
- Befestigen des anzubauenden Inliners (26) im Erdbauwerk.
- Zurückziehen der Transporteinrichtung.
- Lösen der Spanneinrichtungen (27, 28) der Zentriereinrichtung und Versetzen der Zentriereinrichtung an das Ende des neu angebauten Inliners (26a).

4. Verfahren nach einem der Ansprüche 1 bis 3, **dadurch gekennzeichnet**, dass die Transporteinrichtung mit Seilzügen bewegt wird.

5. Verfahren nach einem der Ansprüche 1 bis 4, **dadurch gekennzeichnet**, dass die Transporteinrichtung nach dem Herstellen einer dauerhaften Verbindung aus dem neu verlegten Inliner (26a) zurückgezogen wird.

6. Vorrichtung zum Anbau eines Inliners (26) an einen bereits eingebauten Inliner (26a) in einem Erdbauwerk mit einer selbstfahrenden Transporteinrichtung, die einen Längsträger (1) zur Lagerung eines Inliners (26) und Rollen (4, 5, 6, 7, 8, 9) zur Abstützung des Längsträgers (1) an beiden Enden des Inliners (26) aufweist, und mit einer Zentriereinrichtung zum Verbinden der Inliner (26, 26a), **dadurch gekennzeichnet**, dass die Zentriereinrichtung Spanneinrichtungen (27, 28) aufweist, die mit den zu verbindenden Inlinern (26, 26a) fest verbindbar sind und deren Abstand veränderlich ist.

7. Vorrichtung nach Anspruch 6, **dadurch gekennzeichnet**, dass an dem Längsträger (1) beidseits jeweils ein Sternträger (2, 3) angebracht ist, an dem jeweils mindestens drei lageverstellbare Rollen (4, 5, 6, 7, 8, 9) befestigt sind.

8. Vorrichtung nach Anspruch 6 oder 7, **dadurch gekennzeichnet**, dass am Längsträger (1) mehrere Stempel (12, 13, 14, 15, 16, 17) zur Halterung eines Inliners (26) vorgesehen sind, um den Inliner (26) im Bereich seiner Stirnflächen abzustützen, und dass die Stempel (12, 13, 14, 15, 16, 17) vorzugsweise eine Abstützplatte (18, 19, 20, 21, 22, 23) tragen, welche die jeweilige Stirnkante (24, 25) des Inliners (26) teilweise umgreift.

9. Vorrichtung nach einem der Ansprüche 6 bis 8, **dadurch gekennzeichnet**, dass die Transporteinrichtung längenverstellbar ausgeführt ist.

10. Vorrichtung nach einem der Ansprüche 6 bis 9, **dadurch gekennzeichnet**, dass eine Antriebsvorrichtung zum Antrieb mindestens einer der Rollen (4, 5, 6, 7, 8, 9) der Transporteinrichtung vorgesehen ist.

11. Vorrichtung nach einem der Ansprüche 6 bis 10, **dadurch gekennzeichnet**, dass die Zentriereinrichtung zwei Spannrahmen (27, 28), mindestens zwei Zugeinrichtungen (29), die die Spannrahmen (27, 28) miteinander verbinden und mindestens zwei, vorzugsweise vier, Zentrierbügel (30) aufweist.

12. Vorrichtung nach Anspruch 11, **dadurch gekennzeichnet**, dass die Geometrie der Spannrahmen (27, 28) an den Querschnitt des Inliners (26, 26a) angepasst ist und dass die Querschnittserstreckung des Spannrahmens (27, 28) mittels Zugspindeln elektrisch, hydraulisch oder pneumatisch veränderbar ist.

13. Vorrichtung nach einem der Ansprüche 11 oder 12, **dadurch gekennzeichnet**, dass die Zentrierbügel (30) U-förmig ausgebildet sind, wobei zwei Schenkel jedes Bügels (30) an ihrem freien Ende fest mit dem ersten Spannrahmen (27) verbunden sind und der zweite Spannrahmen (28) Führungen zur Querverschiebung auf den Zentrierbügeln (30) aufweist.
